Europäisches Patentamt

European Patent Office

Office européen des brevets

(11) Numéro de publication: **0 379 114**

**A1**

(12) **DEMANDE DE BREVET EUROPEEN**

(21) Numéro de dépôt: 90100716.1

(22) Date de dépôt: 15.01.90

(51) Int. Cl.⁵: **H04L 27/34, H04L 1/20**

(30) Priorité: 19.01.89 FR 8900596

(43) Date de publication de la demande:
25.07.90 Bulletin 90/30

(84) Etats contractants désignés:
CH DE ES FR GB IT LI NL SE

(71) Demandeur: **ALCATEL TRANSMISSION PAR FAISCEAUX HERTZIENS A.T.F.H.**
**55, rue Greffulhe**
**F-92301 Levallois-Perret Cédex(FR)**
(84) **DE ES FR GB IT NL SE**

Demandeur: **ALCATEL N.V.**
**Strawinskylaan 341**
**NL-1077 XX Amsterdam(NL)**
(84) **CH LI**

(72) Inventeur: **Martineau, Didier**
**55 rue Greffulhe**
**F-92301 Levallois Perret Cedex(FR)**
Inventeur: **Ravoalavoson, Robert**
**3, rue de la Sablière**
**F-92400 Courbevoie(FR)**

(74) Mandataire: **Weinmiller, Jürgen et al**
**Lennéstrasse 9 Postfach 24**
**D-8133 Feldafing(DE)**

(54) Procédé d'asservissement des paramètres d'un modulateur à 2n états de phase et d'amplitude, et dispositif de mise en oeuvre de ce procédé.

(57) La présente invention se rapporte à un procédé d'asservissement de paramètres d'un modulateur à $2^n$ états de phase et d'amplitude, comprenant successivement :
- une étape de détection d'amplitude du signal sortant du modulateur,
- une étape de correction de défaut de centrage de la constellation desdits états,
- une étape de correction de défaut de quadrature entre les porteuses modulées,
- une étape de correction de la différence d'amplitude entre les deux voies (X, Y) qui sont entrées dans le modulateur.
Elle concerne également un dispositif de mise en oeuvre dudit procédé.
Application notamment aux transmissions par faisceaux hertziens.

FIG. 3

**Procédé d'asservissement des paramètres d'un modulateur à $2^n$ états de phase et d'amplitude, et dispositif de mise en oeuvre de ce procédé.**

L'invention se rapporte à un procédé d'asservissement des paramètres d'un modulateur à $2^n$ états de phase et d'amplitude et à un dispositif de mise en oeuvre de ce procédé.

L'invention concerne plus particulièrement un procédé d'asservissement du centrage de constellation, de quadrature, et de l'amplitude des deux voies X et Y de ce modulateur.

Dans le cas d'une modulation à $2^n$ états, qui est une modulation amplitude/phase, si l'on veut réaliser une représentation de type coordonnées dans un espace de signaux on peut placer les états de façon équirépartie par rapport à des axes correspondant à des porteuses orthogonales X et Y. On obtient alors une constellation qui correspond à la représentation vectorielle des états de porteuse dont les projections sur les axes X et Y donnent les coordonnées de l'extrémité du vecteur représenté.

Mais il peut arriver qu'une telle constellation soit décentrée par rapport à ces axes de symétrie, et/ou déphasée par rapport à ces axes de symétrie, et/ou que les amplitudes des voies X et Y soient différentes. Cela peut entraîner une dégradation des performances de l'émetteur, lorsque le domaine concerné est, par exemple, celui des Faisceaux Hertziens.

Dans les dispositifs de l'art connu les réglages de gain et de décalage sur les trains modulants, de déphasage pour l'ajustement de quadrature des porteuses sont manuels. Il existe donc une incertitude sur la validité des ajustements.

D'autre part, en présence d'un gradient de température, les composants constituant les différents blocs subissent une dérive de leurs caractéristiques.

Enfin, en hyperfréquence notamment, la plage d'utilisation autour d'une fréquence de l'oscillateur est très faible.

L'invention a pour objet de pallier ces inconvénients.

Elle propose, à cet effet, un procédé d'asservissement de position dans un modulateur à $2^n$ états de phase et d'amplitude, caractérisé en ce qu'il comprend successivement :
- une étape de détection d'amplitude du signal sortant du modulateur,
- une étape de correction de défaut de centrage de la constellation desdits états,
- une étape de correction de défaut de quadrature entre les porteuses modulées,
- une étape de correction de la différence d'amplitude entre les deux voies (X, Y) qui sont entrées dans le modulateur.

Elle propose en outre un dispositif qui comprend un détecteur, un convertisseur analogique-numérique suivi d'une unité de commande qui reçoit les trains entrés et qui délivre les signaux de commande éventuels ; soient respectivement un signal (DX) de décalage de la voie X, un signal (DY) de décalage de la voie Y, un signal (AX) de commande de l'amplitude de la voie X, un signal (AY) de commande de l'amplitude de la voie Y, et un signal (AQ) de commande de l'angle de quadrature.

Un tel dispositif, selon l'invention, présente un grand nombre d'avantages et notamment celui de permettre un centrage automatique de la constellation, un réglage automatique de la quadrature et un réglage automatique de l'amplitude des deux voies d'entrée de modulateur : Aucun réglage n'est plus nécessaire et aucune dérive en température n'est à craindre.

Les caractéristiques et avantages de l'invention ressortiront d'ailleurs de la description qui va suivre, à titre d'exemple non limitatif, en référence aux figures annexées sur lesquelles :
- la figure 1 illustre la constellation d'état d'un modulateur de type MAQ 16 ;
- la figure 2 illustre un modulateur de l'art antérieur ;
- la figure 3 illustre le dispositif de mise en oeuvre du procédé selon l'invention ;
- la figure 4 représente un organigramme illustrant le procédé selon l'invention.

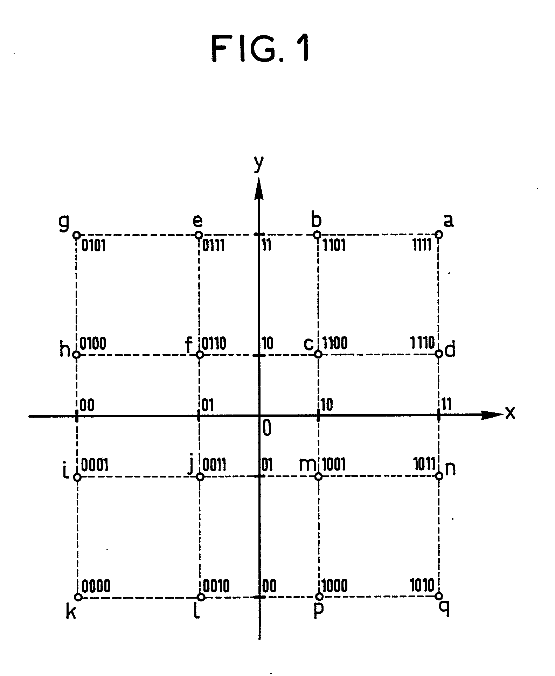

Dans tout ce qui suit, exemple sera pris d'un modulateur à 16 états de type MAQ 16 dont la constellation des états est représentée sur la figure 1.

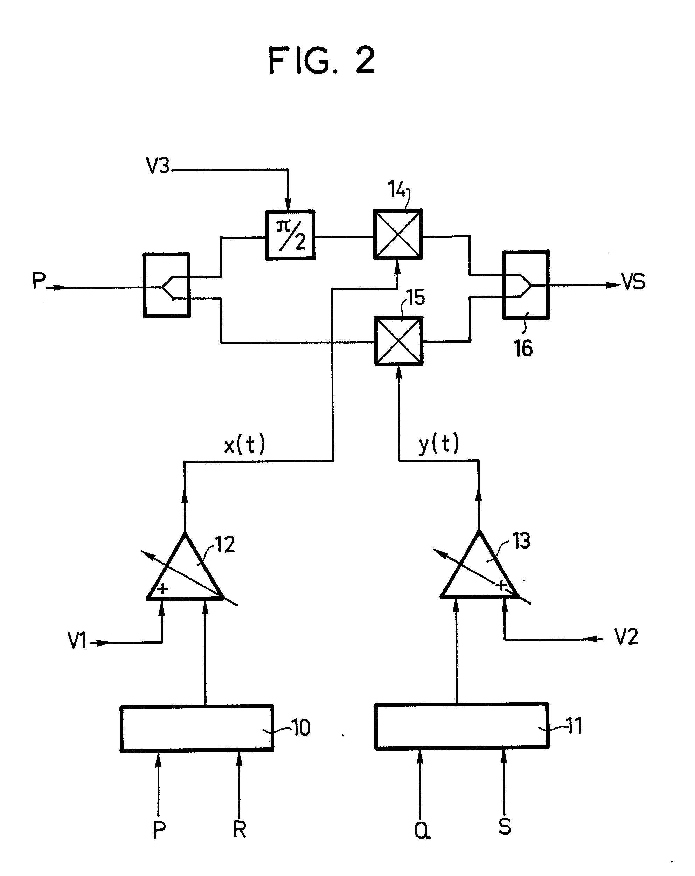

Dans un tel modulateur de l'art connu, tel que représenté sur la figure 2, quatre trains binaires P, R, Q, S sont entrés deux à deux dans deux convertisseurs numériques-analogiques 10 et 11 dont les sorties sont entrées respectivement sur deux amplificateurs 12 et 13 à gain variable qui reçoivent respectivement sur une autre entrée deux tensions de réglage $V_1$ et $V_2$

Les signaux en sortie de ces amplificateurs 12 et 13 forment deux trains X(t) et Y(t) à quatre niveaux qui attaquent deux mélangeurs 14 et 15 recevant par ailleurs à leur autre accès chacun une porteuse, ces porteuses étant déphasées de $\pi/2$ l'une par rapport à l'autre. Cet angle de déphasage peut être réglé à l'aide d'une tension $V_3$. Les états (constellation) de la sortie VS modulée à $2^n$ états de phase et d'amplitude, en sortie de l'additionneur 16, sont illustrés sur la figure 1 par des croix, avec comme exemple

2

une modulation à 16 états.

La constellation est dans ce cas centrée : les projections des vecteurs, correspondants aux différents états, sur les deux axes sont, deux à deux, de même amplitude et en opposition de phase.

A partir d'une détection d'amplitude sur le signal sortant du modulateur (ou même de l'émetteur) on peut comparer entre elles les différentes amplitudes émises, un choix judicieux permettant alors de commander une boucle d'asservissement de chaque paramètre à corriger.

L'ordre séquentiel des corrections est imposé par la validité des informations fournies par la détection. La séquence est la suivante :
- correction du défaut de centrage de la constellation,
- correction du défaut de quadrature entre les porteuses modulées,
- correction de la différence d'amplitude entre les deux voies.

Il existe huit cas différents de décentrage d'une telle constellation :
- vers le haut ;
- vers le bas ;
- à droite ;
- à gauche ;
- en haut, à droite ;
- en haut, à gauche ;
- en bas, à droite ;
- en bas, à gauche.

Si on ne s'intéresse qu'au module des vecteurs on détermine le sens du décentrage de la constellation selon le tableau I en fin de description ; les vecteurs concernés étant

$$\overrightarrow{Oa}, \ \overrightarrow{Ok}, \ \overrightarrow{Og}, \ \overrightarrow{Oq}$$

en appelant A le module du vecteur $\overrightarrow{Oa}$ , k le module du vecteur $\overrightarrow{OK}$ , G le module du vecteur $\overrightarrow{Og}$ et Q le module du vecteur $\overrightarrow{Oq}$ .

La constellation est alors centrée, mais il peut subsister un défaut de quadrature sur le déphasage entre les deux porteuses, ainsi qu'une différence d'amplitude entre les modulations issues de X et de Y. La constellation est alors déphasée d'un angle $\delta \phi$ par rapport à ses axes de symétrie. Pour corriger la quadrature, le tableau 11 en fin de description est alors valide, les vecteurs concernés étant les vecteurs Oa, Og, Ok et Og de la constellation (de module A, G, K, Q).

Dans le cas d'une différence d'amplitude entre les voies X et Y, la constellation est à présent centrée et les porteuses en quadrature. Pour déterminer l'écart relatif d'amplitude entre les voies X et Y et en connaître le sens, on va analyser les vecteurs

$$\overrightarrow{Ob}, \ \overrightarrow{Oe}, \ \overrightarrow{Ol}, \ \overrightarrow{Op}, \ \overrightarrow{Od}, \ \overrightarrow{Oh}, \ \overrightarrow{On}, \ \overrightarrow{Oi}$$

de la constellation d'après le tableau III (de module B, E, L, P, D, H, N, I).

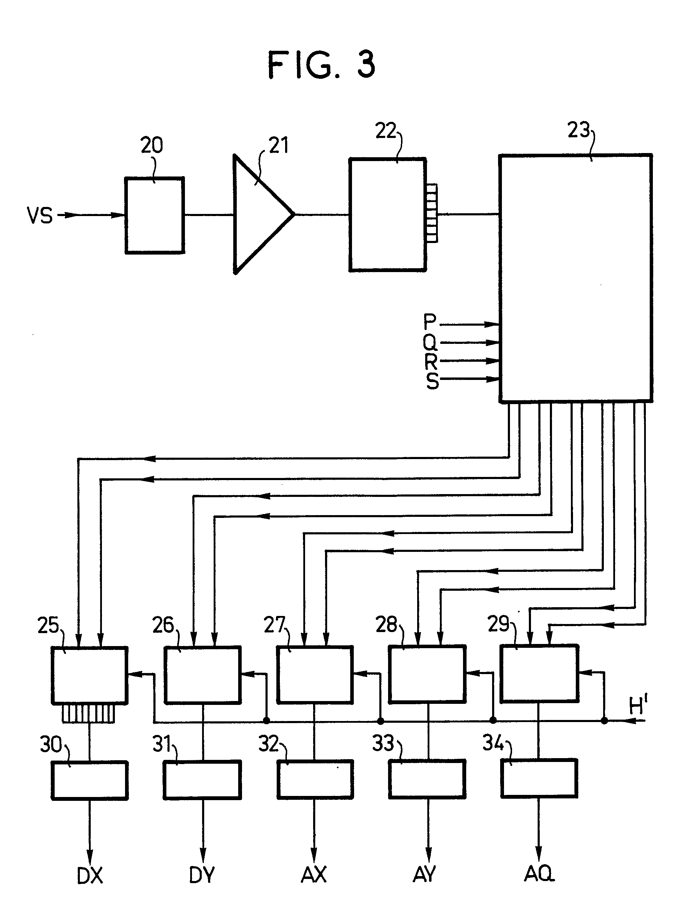

Le dispositif de mise en oeuvre de ce procédé, tel que représenté à la figure 3, comprend un détecteur 20 recevant le signal VS de sortie du modulateur, un amplificateur 21, un convertisseur analogique-numérique 22 suivi d'une unité de commande 23, comprenant par exemple un microprocesseur ou une unité de logique câblée, qui reçoit en entrées les quatre trains P, Q, R, S dans le cas de la modulation à 16 états MAQ 16, et qui délivre des signaux de sortie. Ces signaux sont entrés respectivement dans cinq compteurs-décompteurs 25, 26, 27, 28, 29 suivis respectivement de cinq convertisseurs numérique-analogique 30, 31, 32, 33 et 34 de manière à générer un signal DX de décalage de la voie X, un signal DY de décalage de la voie Y, un signal AX de commande de l'amplitude de la voie X, un signal AY de commande de l'amplitude de la voie Y, et un signal AQ de commande de l'angle de quadrature.

Le signal VS, après détection, est converti en donnée numérique (sur 8 bits par exemple). Cette valeur, proportionnelle au module de chaque vecteur mesuré, est envoyée en permanence sur le bus de donnée du microprocesseur 23, par exemple, qui ne la prend en compte que lorsqu'elle concerne un point intéressant (signal de validation codé à partir des quatre P, Q, R et S dans l'exemple d'une modulation MAQ 16).

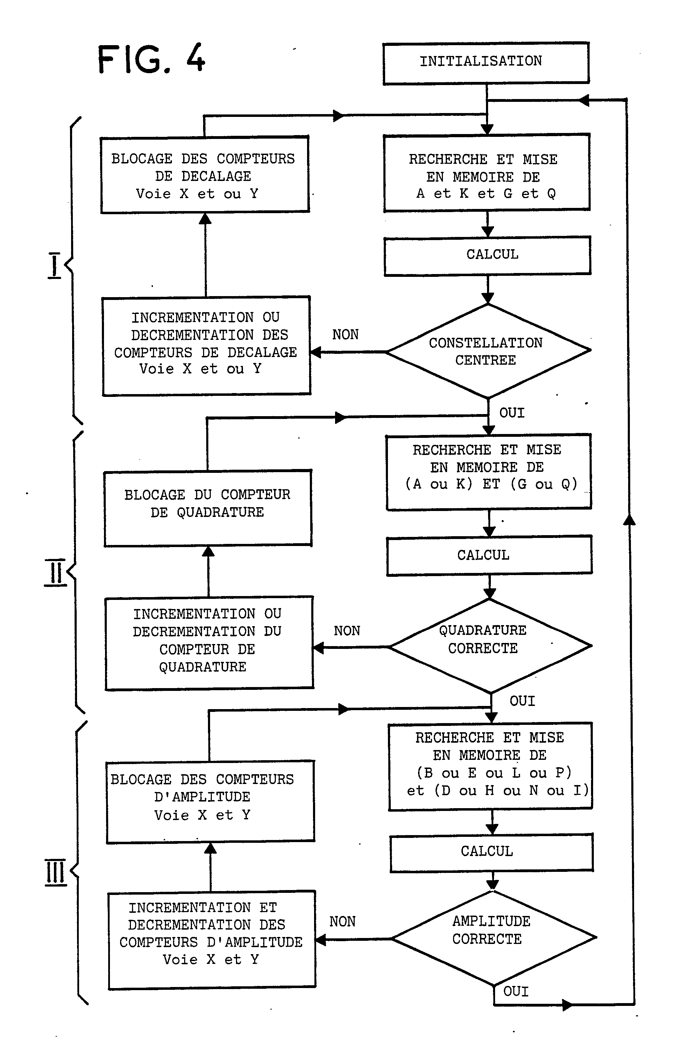

Le procédé de l'invention est résumé sur l'organigramme de la figure 4, sur lequel on retrouve une phase d'initialisation et les trois étapes successives I, II et III.

Dans la phase d'initialisation, le système met toutes les tensions de sortie des convertisseurs numériques/analogiques à une valeur moyenne prédéterminée.

Après cette phase d'initialisation le procédé de l'invention se décompose comme suit :

- Première étape de centrage de la constellation (I) :

Lorsque les valeurs intéressantes, à savoir A, K, G et Q ont été acquises le dispositif passe en mode calcul et détermine les corrections éventuelles à effectuer selon les indications du tableau I.

Ceci fait, un compteur/décompteur de décalage voie x (DX) et un compteur/décompteur de décalage voie Y (DY), sont incrémentés et/ou décrémentés, puis bloqués au bout d'un temps proportionnel au module de l'erreur.

Les compteurs/décompteurs sont pilotés par une horloge lente $H'$ qui définit la vitesse et la bande passante de la boucle.

La valeur numérique en sortie du compteur/décompteur considéré (25 ou 26) est transformée par un convertisseur numérique/analogique (30 ou 31) en une tension (DX ou DY) qui remplace la tension de décalage ($V_1$ ou $V_2$) réglée manuellement sur le modulateur connu tel que représenté à la figure 2.

La boucle est répétée jusqu'à ce qu'une information "erreur nulle" soit obtenue, ce qui correspond à une constellation centrée, on passe alors à la seconde étape.

- Deuxième étape de correction du défaut de quadrature (II) :

Lorsque les valeurs intéressantes, à savoir A ou Q ; et K ou G ont été acquises, le dispositif passe en mode calcul et détermine les corrections éventuelles à effectuer selon les indications du tableau II.

Ceci fait, le compteur/décompteur 29 de correction de quadrature est incrémenté ou décrémenté, puis bloqué au bout d'un temps proportionnel au module de l'erreur.

Ce compteur/décompteur est piloté par une horloge lente $H'$ qui définit la vitesse et la bande passante de la boucle.

La valeur numérique en sortie du compteur/décompteur 29 est transformée par un convertisseur numérique/analogique 34 en une tension AQ qui remplace le réglage de quadrature manuel (tension $V_3$) sur le modulateur connu tel que représenté à la figure 2.

Cette boucle est répétée jusqu'à ce qu'une information "erreur nulle" soit obtenue, ce qui correspond à une constellation sans défaut de quadrature, on passe alors à la troisième étape.

- Troisième étape de correction de la différence d'amplitude entre voies (III) :

Lorsque les valeurs intéressantes à savoir B ou E ou L ou P ; et D ou H ou N ou I ont été acquises, le dispositif passe en mode calcul et détermine les correction éventuelles à effectuer selon les indications du tableau III.

Ceci fait un compteur/décompteur d'amplitude voie X (26) et un compteur/décompteur d'amplitude voie Y 17 sont incrémentés et/ou décrémentés puis bloqués au bout d'un temps proportionnel au module de l'erreur.

Les compteurs/décompteurs sont pilotés par une horloge lente $H'$ qui définit la vitesse et la bande passante de la boucle.

La valeur numérique en sortie de chaque compteur/décompteur (27, 28) est transformée par un convertisseur numérique/analogique (32, 33) en une tension (AX, AY) qui remplace le réglage manuel de commande du gain des amplificateurs 12 et 13 sur le modulateur de l'art connu tel que représenté à la figure 2.

La boucle est répétée jusqu'à ce qu'une information "erreur nulle" soit obtenue, ce qui correspond à une constellation sans différence d'amplitudes entre les voies X et Y.

L'ensemble des trois boucles de correction ayant été effectué, la constellation est "parfaite".

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

4

TABLEAU I

| cas possibles | décentrage | action de correction |
|---|---|---|
| A>K et G>Q | vers le haut | décalage<O sur voie Y |
| A>K et G = Q | haut + droite | décalage<O sur X et Y |
| A>K et G<Q | à droite | décalage<O sur voie X |
| A<K et G>Q | à gauche | décalage>O sur voie X |
| A<K et G = Q | bas + gauche | décalage>O sur X et Y |
| A<K et G<Q | vers le bas | décalage>O sur voie Y |
| A = K et G<Q | haut + gauche | décalage>O sur voie X |
| | | décalage<O sur voie Y |
| A = K et G<Q | bas + droite | décalage<O sur voie X |
| | | décalage>O sur voie Y |
| A = K et G = Q | centré | aucune action |

TABLEAU II

| cas possibles | défaut correspondant | action de correction | cas résumé |
|---|---|---|---|
| A>G ou A>Q ou K>G ou K>Q | $\delta\phi< O$ | augmenter $\delta\phi$ | A + K>G + Q |
| A<G ou A<Q ou K<G ou K<Q | $\delta\phi> O$ | diminuer $\delta\phi$ | A + K<G + Q |
| A = G ou A = Q ou K = G ou K = Q | $\delta\phi = O$ | aucune action | A + K = G + Q |

TABLEAU III

| cas possibles | défaut d'amplitude | action de correction |
|---|---|---|
| B + E + L + P>D + H + N + I | amplitude voie Y | amplitude voie Y ↘ |
| | > | et |
| | amplitude voie X | amplitude voie X ↗ |
| B + E + L + P<D + H + N + I | amplitude voie Y | amplitude voie Y ↗ |
| | < | et |
| | amplitude voie X | amplitude voie X ↘ |
| B + E + L + P = D + H + N + I | aucun défaut | aucune action |

## Revendications

1/ Procédé d'asservissement de position dans un modulateur à $2^n$ états de phase et d'amplitude, caractérisé en ce qu'il comprend successivement :
- une étape de détection d'amplitude du signal sortant du modulateur,
- une étape de correction de défaut de centrage de la constellation desdits états,
- une étape de correction de défaut de quadrature entre les porteuses modulées,
- une étape de correction de la différence d'amplitude entre les deux voies (X, Y) qui sont entrées dans le modulateur.

2/ Procédé selon la revendication 1, caractérisé en ce que le signal de sortie du modulateur après détection est converti en donnée numérique, cette valeur, proportionnelle au module de chaque vecteur mesuré, étant envoyée en permanence dans une unité de commande (23) qui ne la prend en compte que lorsqu'elle concerne un point intéressant.

3/ Procédé selon la revendication 1, caractérisé en ce que dans chaque étape, lorsque les valeurs intéressantes ont été acquises en numérique, on calcule les corrections éventuelles à effectuer, puis après un comptage/décomptage suivi d'une conversion numérique-analogique, on obtient la valeur de commande, la boucle étant répétée jusqu'à ce que l'erreur détectée soit nulle.

4/ Dispositif de mise en oeuvre du procédé selon l'une quelconque des revendications 1 à 3, caractérisé en ce qu'il comprend un détecteur (20), un convertisseur analogique-numérique (22) suivi d'une unité de commande (23) qui reçoit les trains entrés (P, Q, R, S) et qui délivre les signaux de commande éventuels soient respectivement un signal (DX) de décalage de la voie X, un signal (DY) de décalage de la voie Y, un signal (AX) de commande de l'amplitude de la voie X, un signal (AY) de commande de l'amplitude de la voie Y, et un signal (AQ) de commande de l'angle de quadrature.

5/ Dispositif selon la revendication 4, caractérisé en ce que chacun de ces signaux de commande est entré dans un compteur-décompteur (25, 26, 27, 28, 29) suivi d'un convertisseur numérique-analogique (30, 31, 32, 33, 34).

6/ Dispositif selon la revendication 5, caractérisé en ce que les compteurs/décompteurs sont pilotés par une horloge lente (H') qui définit la vitesse et la bande passante de la boucle.

# FIG. 1

# FIG. 2

# FIG. 3

# FIG. 4

```
                                              ┌─────────────────────┐
                                              │   INITIALISATION    │
                                              └─────────────────────┘
                                                         │
   ┌──────────────────────────┐            ┌─────────────────────┐
   │ BLOCAGE DES COMPTEURS    │            │  RECHERCHE ET MISE  │
   │     DE DECALAGE          │            │   EN MEMOIRE DE     │
   │    Voie X et ou Y        │            │  A et K et G et Q   │
   └──────────────────────────┘            └─────────────────────┘
                ▲                                       │
                │                             ┌─────────────────────┐
   I            │                             │      CALCUL         │
                │                             └─────────────────────┘
                │                                       │
   ┌──────────────────────────┐         NON      ◇─────────────◇
   │   INCREMENTATION OU      │◄─────────────────│ CONSTELLATION │
   │  DECREMENTATION DES      │                  │   CENTREE     │
   │ COMPTEURS DE DECALAGE    │                  ◇─────────────◇
   │    Voie X et ou Y        │                         │ OUI
   └──────────────────────────┘                ┌─────────────────────┐
                                               │  RECHERCHE ET MISE  │
                                               │   EN MEMOIRE DE     │
   ┌──────────────────────────┐                │  (A ou K) ET (G ou Q)│
   │  BLOCAGE DU COMPTEUR     │                └─────────────────────┘
   │    DE QUADRATURE         │                         │
   └──────────────────────────┘                ┌─────────────────────┐
                ▲                               │      CALCUL         │
   II           │                              └─────────────────────┘
                │                                       │
   ┌──────────────────────────┐        NON       ◇─────────────◇
   │   INCREMENTATION OU      │◄─────────────────│  QUADRATURE   │
   │  DECREMENTATION DU       │                  │   CORRECTE    │
   │   COMPTEUR DE            │                  ◇─────────────◇
   │   QUADRATURE             │                         │ OUI
   └──────────────────────────┘                ┌─────────────────────┐
                                               │  RECHERCHE ET MISE  │
                                               │   EN MEMOIRE DE     │
   ┌──────────────────────────┐                │ (B ou E ou L ou P)  │
   │ BLOCAGE DES COMPTEURS    │                │ et (D ou H ou N ou I)│
   │    D'AMPLITUDE           │                └─────────────────────┘
   │    Voie X et Y           │                         │
   └──────────────────────────┘                ┌─────────────────────┐
                ▲                               │      CALCUL         │
   III          │                              └─────────────────────┘
                │                                       │
   ┌──────────────────────────┐        NON       ◇─────────────◇
   │   INCREMENTATION ET      │◄─────────────────│  AMPLITUDE    │
   │  DECREMENTATION DES      │                  │   CORRECTE    │
   │ COMPTEURS D'AMPLITUDE    │                  ◇─────────────◇
   │    Voie X et Y           │                         │ OUI
   └──────────────────────────┘
```

Office européen
des brevets

**RAPPORT DE RECHERCHE EUROPEENNE**

Numero de la demande

EP   90 10 0716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 173 074  (NEC) <br> * Figure 8; page 3, lignes 37-75 * <br> --- | 1-4 | H 04 L   27/34 <br> H 04 L    1/20 |
| A | I.E.E.E. JOURNAL ON SELECTED AREAS IN COMMUNICATIONS, vol. 6, no. 5, juin 1988, pages 819-827, IEEE, New York, US; K.E. BROWN et al.: "Knowledge-based techniques for fault detection in digital microwave radio communication equipment" <br> * Page 820, colonne 1, lignes 10-24; figure 6 * <br> ----- | 1 | |

**DOMAINES TECHNIQUES RECHERCHES (Int. Cl.5)**

H 04 L

Le présent rapport a été établi pour toutes les revendications

| Lieu de la recherche | Date d'achèvement de la recherche | Examinateur |
|---|---|---|
| LA HAYE | 25-04-1990 | SCRIVEN P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                                                                     
& : membre de la même famille, document correspondant

EPO FORM 1503 03.82 (P0402)